# EUROPEAN PATENT APPLICATION

(11) **EP 1 522 916 A2**
(43) Date of publication of application: **13.04.2005**
(21) Application number: 04256047.4
(22) Date of filing: 30.09.2004
(51) Int. Cl.: G06F 3/12

(54) **Information processing apparatus, information processing method, and control program**

(30) Priority: 06.10.2003 JP 2003347655; 08.10.2003 JP 2003349206
(71) Applicant: Canon Kabushiki Kaisha, Tokyo (JP)
(72) Inventor: Arakawa, Naoto, Ohta-ku, Tokyo (JP)
(74) Representative: Beresford, Keith Denis Lewis

(57) **Abstract**

There is disclosed a control program for allowing a computer to execute: a setting step of displaying a print service setting display screen which is obtained from a server onto a display apparatus possessed by an information processing apparatus and setting a print setting to be registered onto the print service setting display screen; a specific storing area forming step of forming a specific storing area in which the print setting set by the setting step is used as property information onto a storing apparatus every setting; and a folder managing step of detecting an inputting state of document information into the specific storing area formed by the specific storing area forming step and uploading the print setting and the document information set in the specific storing area onto the server.

## Description

### BACKGROUND OF THE INVENTION

### Field of the Invention

The invention relates to print service system and method and a client apparatus.

### Related Background Art

A conventional print service system comprises: a client apparatus for instructing execution of printing through a user interface; a print service server for managing the print instruction from a client; and a print shop system for executing the actual printing. Upon printing, order information of the printing and information such as a print style and the like set by the user are transmitted from the client to the print service server and managed on the print service server side. Print data is sent to the print shop system together with those information and desired printing is executed.

### SUMMARY OF THE INVENTION

However, since the order information with which the first printing was performed and the information such as a print style and the like set by the user are managed on the print service server side, in the case of printing print data from the client again on the basis of those information obtained in the printing executed before, it is necessary to log into the server once, make selections, execute an inputting process, and the like.

Attention has thus been directed to a solution of this, problem. In the disclosed embodiments of the invention described herein, order information and print style information which has been set once by the user in a first printing process does not need to be set again when similar printing is executed after that A feature of embodiments of the invention is to switch a confirming mode and a direct connecting mode when the similar printing is executed again by the information which has already been set.

There is provided, as disclosed herein, an information processing apparatus used in a print system constructed by at least one or more clients for forming data for printing, a server for executing management of print data of a print service, a print modifying process, input/management of orders, or the like, and a shop system for executing a printing process of the print data, the apparatus comprising: storing means for storing the print data; means for allocating a storing area to a specific folder and managing it; means for holding information for modifying the print data into the specific folder; means for holding order information of the printing process into the specific folder; means for generating an event when the print data is inputted into the specific folder; means for confirming contents of the print data in the specific folder by the event; means for rewriting setting information of print modification on the basis of information for modifying the print data; and means for rewriting setting information of order on the basis of the order information of the printing process.

As mentioned above, a process for temporarily holding the print data which was dragged and dropped to the storing means into arbitrary storing means of the client side, confirming the contents, and uploading it to a server in the second and subsequent printing processes and a process for executing processes in a lump to directly upload the dragged and dropped print data onto the server and set the order information and style information of the printing in the storing means can be switched on the basis of attribute information in the storing means.

By setting the print setting information based on the processes executed before upon printing into the arbitrary storing means of the client side, an order/print style of each storing means can be switched.

By providing a function of a hot folder in a mechanism for uploading the print data of the client side, a request/setting of the second and subsequent printings can be simplified.

At this time, the process for temporarily holding the print data into the hot folder, confirming its contents, and uploading them onto the server and the process for executing in a lump the processes to upload the contents onto the server without confirming them and set the order information on the hot folder and style information of the printing can be switched by the setting on the hot folder, so that a flow for the printing process by the user can be simplified.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a schematic diagram showing a whole print service;
Fig. 2 is a constructional diagram of a client computer;
Fig. 3 is a constructional diagram of a print service server system;
Fig. 4 is a constructional diagram of a print shop print system;
Fig. 5 is a constructional diagram of a default hot folder;
Fig. 6 is a constructional diagram of a hot folder;
Fig. 7 is a diagram showing a default hot folder dialog;
Fig. 8 is a diagram showing a hot folder dialog;
Fig. 9 is a diagram showing a default hot folder dialog (thumbnail/document information display);
Fig. 10 is a diagram showing a hot folder dialog (thumbnail/document information display);
Fig. 11 is a diagram showing a hot folder dialog (order/print style information change);
Fig. 12 is a diagram showing a hot folder dialog (property setting);
Fig. 13 is a diagram showing a login dialog;
Fig. 14 is a diagram showing a print style setting Web display;
Fig. 15 is a diagram showing an order setting Web display;
Fig. 16 is a diagram showing a hot folder forming process;
Fig. 17 is a diagram showing a hot folder using process;
Fig. 18 is a general flowchart showing the operation of an embodiment of the invention;
Fig. 19 is a general flowchart showing the operation of the embodiment of the invention;
Fig. 20 is a general flowchart showing the operation of the embodiment of the invention;
Fig. 21 is a general flowchart showing the operation of the embodiment of the invention; and
Fig. 22 is a general flowchart showing the operation of the embodiment of the invention.

### DESCRIPTION OF THE PREFERRED EMBODIMENTS

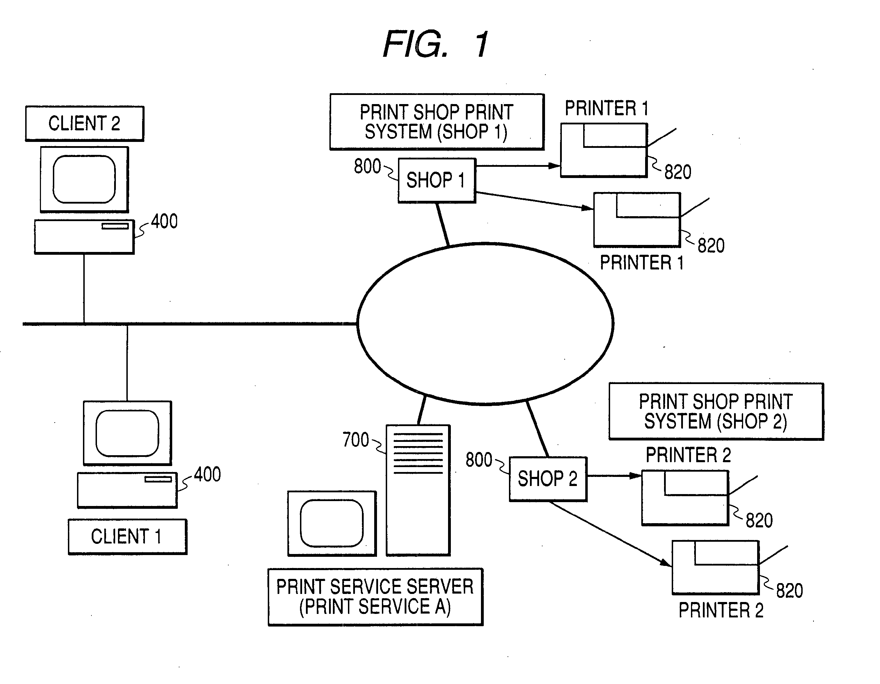

A print service system according to the invention will be described hereinbelow with reference to the drawings. As shown in Fig. 1, the print service system of the invention comprises: a plurality of client computers 400 which are connected to a network and each of which forms data for printing; one or more print service servers 700 which are likewise connected to the network and each of which executes management of the print data of print services, input/management of orders, and the like; and a plurality of shop systems 800 each for managing a plurality of printers which execute a printing process of the print data and executing the actual printing process.

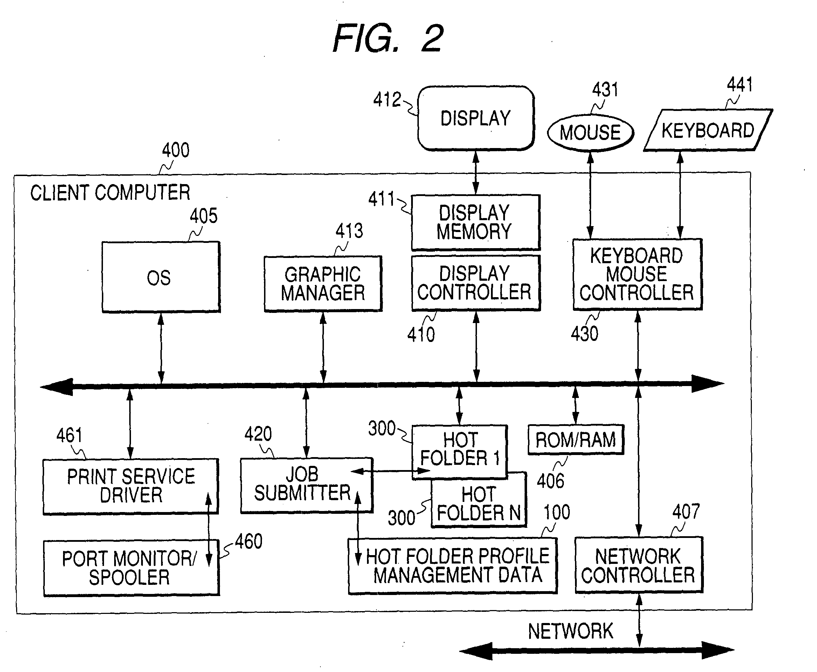

Fig. 2 shows a construction of the client computer 400 of a client serving as a client apparatus.

The client computer 400 is constructed by: a network controller 407 for transmitting and receiving various data to/from the print service server having a Web function; an OS 405 for making central control; a hard disk (not shown) for temporarily storing data of an application, print service document data as an example of the print data, and storing various data; a hard disk controller (not shown) for controlling the hard disk; a ROM/RAM memory 406; a mouse 431 and a keyboard 441 for inputting an instruction from the operator; a controller 430 for the mouse 431 and keyboard 441; a display 412 for layout/editing/menu display; a display memory 411; a display controller 410; a graphic manager 413 for executing various image processes, a display process, a graphic forming process, and the like; a print service driver 461 for executing a process to convert data from an application program into print service document data 351 for a print service through the graphic manager 413; a port monitor/spooler 460 for spooling the converted print service document data; a hot folder 300 as storing means for temporarily storing the data; a job submitter 420 for managing the data from the hot folder 300, executing a process to connect to the print service server, and uploading various data; and the like.

A method according to each of the embodiments of the invention can be described by software such as various programs, objects, and the like and data concerned with such software. Those various programs, objects, and the like are stored into the ROM/RAM memory 406, properly read out therefrom, and can be executed on the OS 405 and/or a CPU (not shown) of a computer. Those programs and objects can be also stored into various storing apparatuses built in the computer 400 or storing apparatuses which are externally attached other than the ROM/RAM memory 406.

On the client computer, the hot folder 300 is displayed as an icon of an ordinary folder. The user can directly drag and drop not only the print service document data from the print service driver 461 but also arbitrary application data 350 onto the hot folder 300.

A plurality of hot folders 300 can be formed and they are managed by using hot folder profile management data 100 by the job submitter.

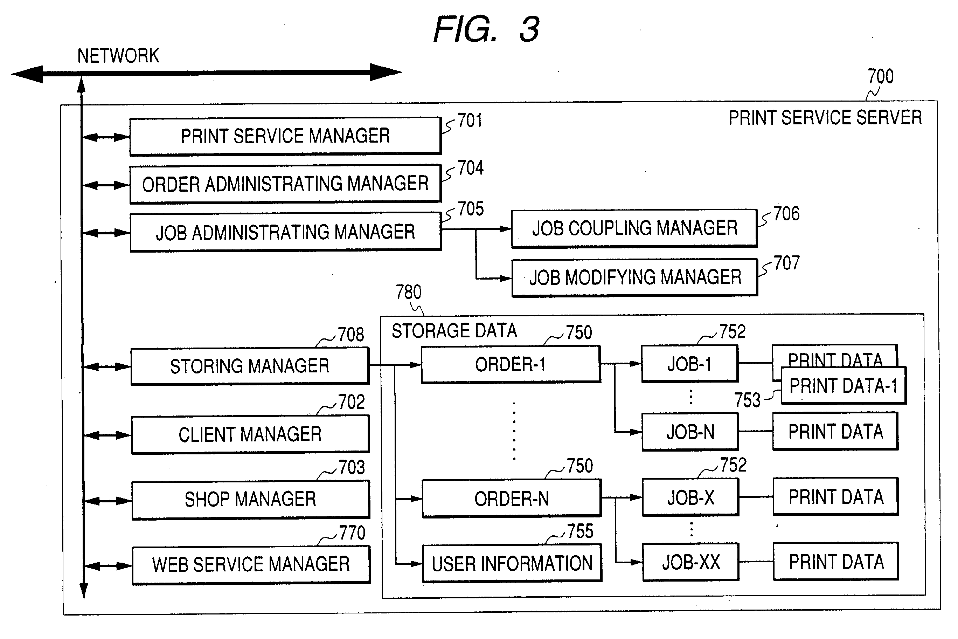

Fig. 3 shows a construction of the print service server 700 according to the invention. In the print service server 700, the following various managers operate: a Web service manager 770 for performing general Web services; a print service manager 701 for mainly managing the whole print service server; a client manager 702 for performing various settings/management of the print services from a plurality of clients; an order administrating manager 704 for administrating print service requests from the clients on an order unit basis; a job administrating manager 705 for administrating a plurality of print data as one print job; and the like.

There is also a case where one order is constructed by a plurality of jobs. The following managers operate: a job coupling manager 706 for executing a coupling process by merging a plurality of print data uploaded from the clients into one print data; a job modifying manager 707 for executing a previewing process of the print data and a thumb nail forming process; a storing manager 708 for managing storage data 780 linked to print data 753 uploaded from the clients, merged print data 753, a plurality of registered order information 750, one or more job information 752 corresponding thereto, and one or more print data 753 in response to one job information; and the like.

Further, the storing manager 708 also stores a user name/a user ID of each client and user information 755 of a password corresponding thereto.

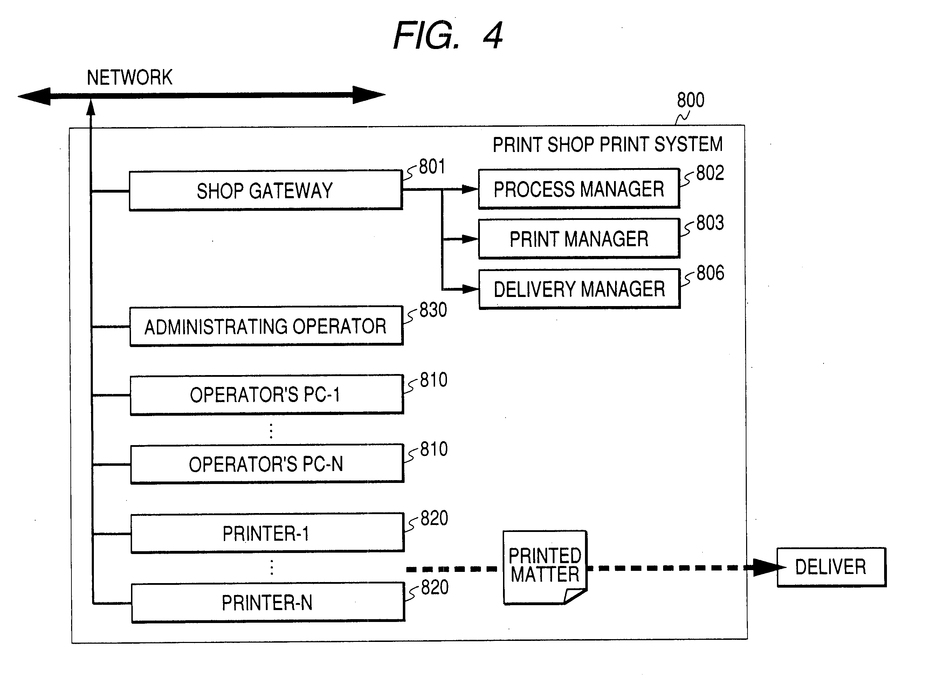

Fig. 4 shows a construction of a print shop print system 800. The shops can be provided at a plurality of base points. One shop is constructed by: a shop gateway 801 for communicating with the print service server 700 and making the whole management of the shop side; a process manager 802 for allocating processing steps to the operators who execute the printing process and managing a progressing situation of the printing; a print manager 803 for allowing a printer 820 to execute the printing and managing a process to finish the printing, an error process, and the like; a delivery manager 806 for managing a process to deliver printed matter which has been printed and booklet-processed; and the like. A plurality of operator's PCs 810 by which the operators to which print jobs have been allocated execute the printing process and an inputting process and a plurality of printers 820 for executing the actual printing are also connected to a network of the same shop.

### (First embodiment)

The first embodiment will now be described hereinbelow with reference to the drawings.

### <Hot folder>

There are the following two types of hot folders in the embodiment: a default hot folder 305 in which a property showing print setting information such as order information/print style information or the like is not set at all; and the hot folder 300 in which a print service up to the printing has been executed once and the set properties of the order information/print style information were set after the execution of the print services.

Only one default hot folder exists in the client computer. As for the general hot folder 300, an arbitrary number of hot folders as many as the number of properties of the order information/print style information set by the user can be formed.

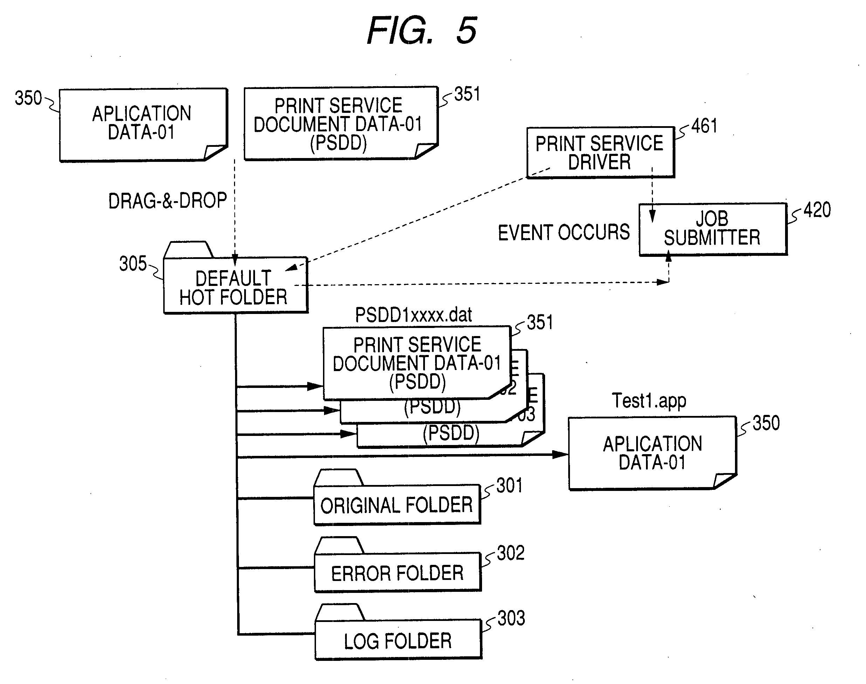

Fig. 5 shows a construction of the default hot folder 305. The default hot folder is displayed as an icon on the client computer. An arbitrary number of application data 350 or print service document data 351 which already exist can be dragged and dropped onto the icon of the default hot folder by using the mouse. Thus, the data is copied into the default hot folder and inputted (transferred) into the folder.

As another method, the user selects the print service driver 461 from the applications and executes the printing process. Thus, as mentioned above, the data from the application program is sent to the print service driver 461 through the graphic manager 413 and converted into the print service document data 351 for the print service. The converted print service document data is stored in the default hot folder through the port monitor/spooler 460.

Further, the following folders are included in the default hot folder 305: an original folder 301 serving as a destination to which the data inputted by the above method is moved when the data is normally uploaded to the print service server; an error folder 302 from which the target data is moved when an error occurs; and a log folder 303 in which processed log information of the print service is stored.

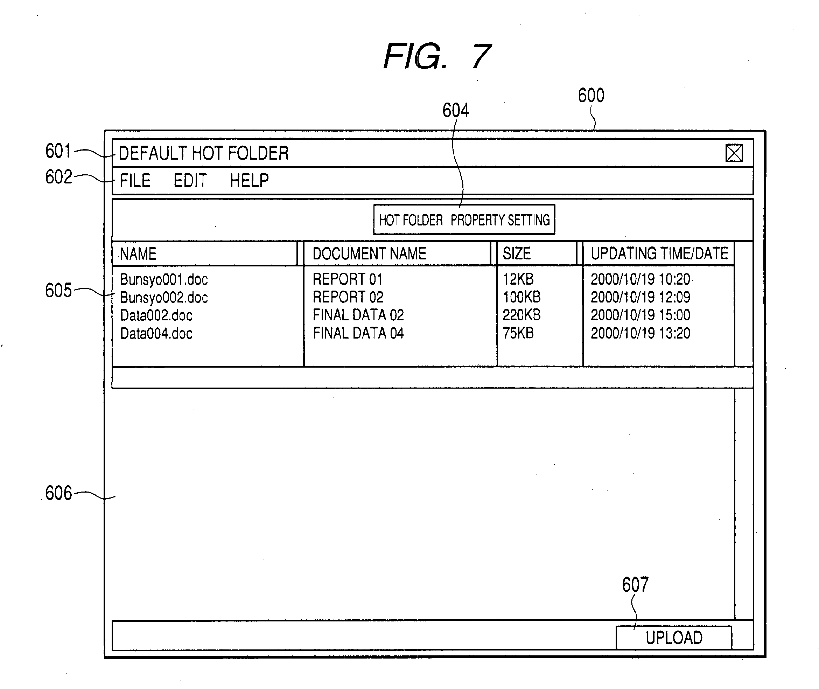

By the above operations, the port monitor/spooler 460 copies the data into the default hot folder 305 and, at the same time, calls the job submitter 420. The job submitter 420 displays a window of a default hot folder dialog 600 shown in Fig. 7.

A name added to the hot folder is displayed to a title portion 601. The default hot folder dialog 600 comprises: a menu portion 602 in which general menu processes such as "finish" and the like are assembled; a hot folder property setting button 604 for setting the property of the hot folder; a list display portion 605 of the data files inputted into the default hot folder mentioned above; an information display portion 606 for displaying various information; an upload button 607 for starting a process to upload the data in the default hot folder onto the print service server; and the like.

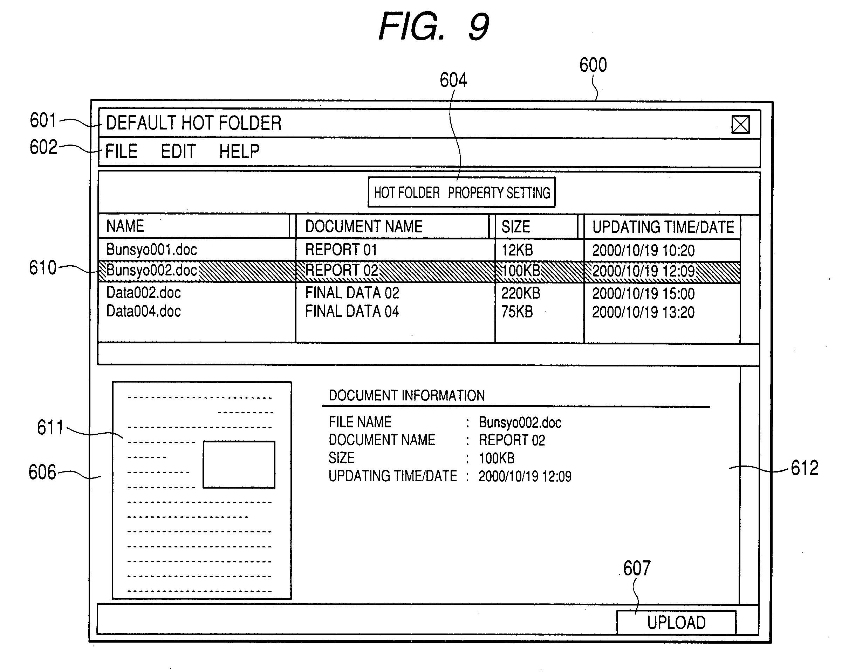

A file name of each file, a document name to identify it, a data size, and updating time/date are displayed in the list display portion 605 of the inputted data files. When one of the files displayed in the list display portion 605 of the data files is clicked by the mouse, as shown in Fig. 9, a thumbnail display 611 of the data and document information 612 of the selected data file are displayed in the information display portion 606.

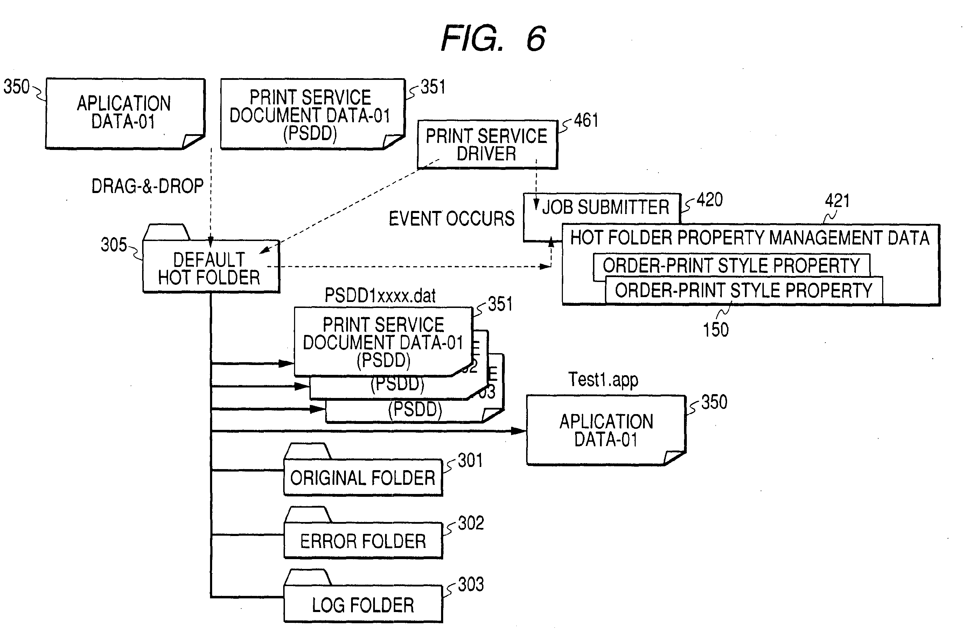

Fig. 6 shows a construction of the general hot folder 300. This construction and a data inputting method are similar to those of the foregoing default hot folder 305 except for such a difference that the job submitter 420 shown in Fig. 6 holds order/print style property information 150 corresponding to each hot folder into hot folder profile management data 421 and manages it.

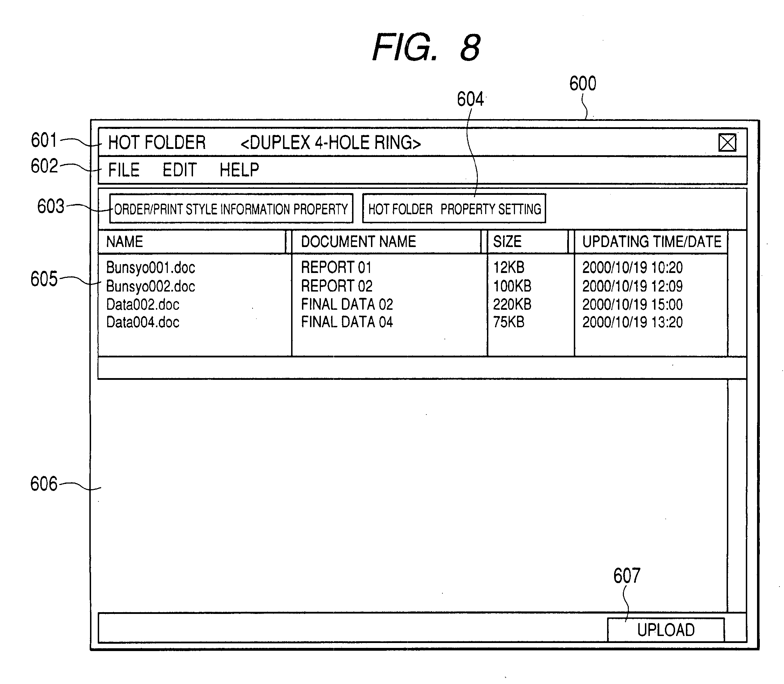

When the data is inputted into the hot folder, a window of a hot folder dialog shown in Fig. 8 is displayed in a manner similar to the case of the default hot folder. This window differs from that of the default hot folder with respect to a point that a button 603 to display the order/print style information property set in the hot folder is provided.

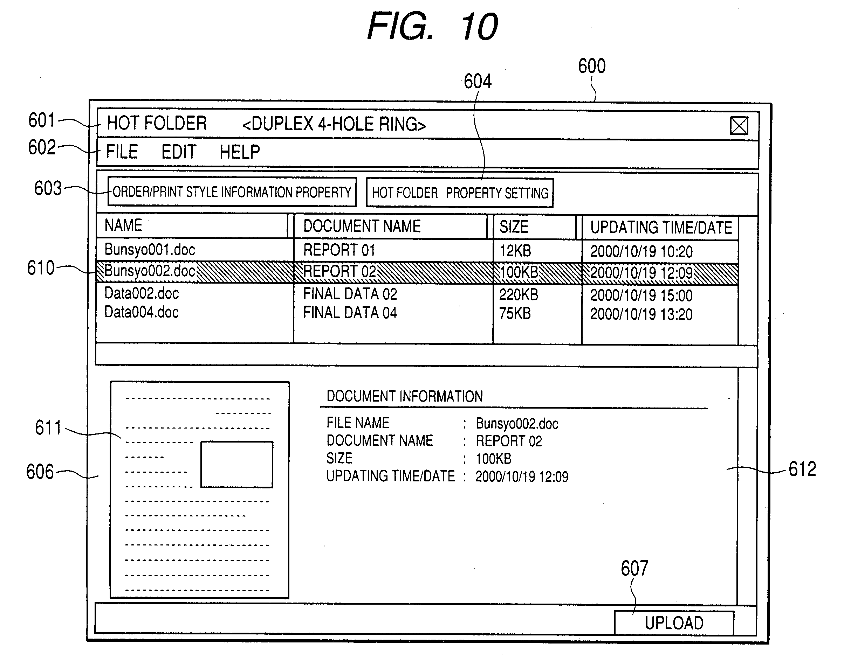

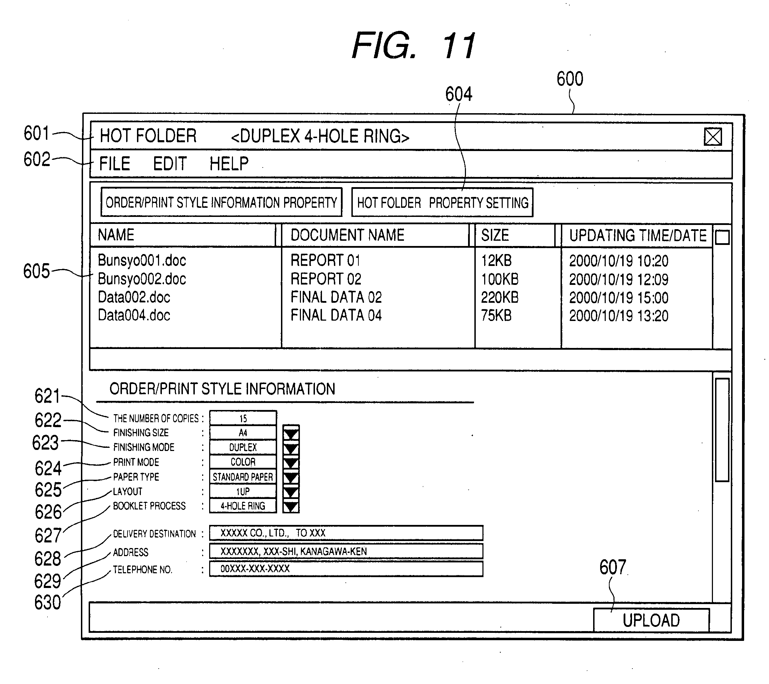

As shown in Fig. 10, also in the case where the file in the list display portion 605 of the data files is clicked by the mouse, a thumbnail of the data file and document information are displayed in a manner similar to the processes of the default hot folder mentioned above. When the button 603 to display the order/print style information property is clicked, the order/print style property information is displayed in an information display portion of a hot folder dialog shown in Fig. 11. Therefore, prior to uploading the data onto the print service server 700, the order/print style property information 150 set into the hot folder can be confirmed.

An operating procedure using a mechanism of the hot folder in the print service system with the above construction will now be described hereinbelow.

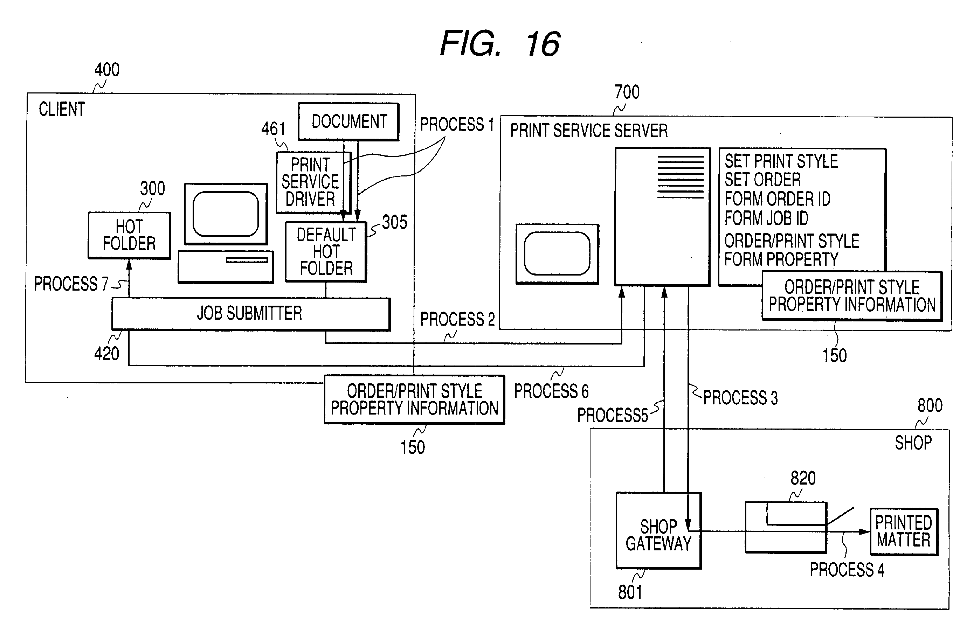

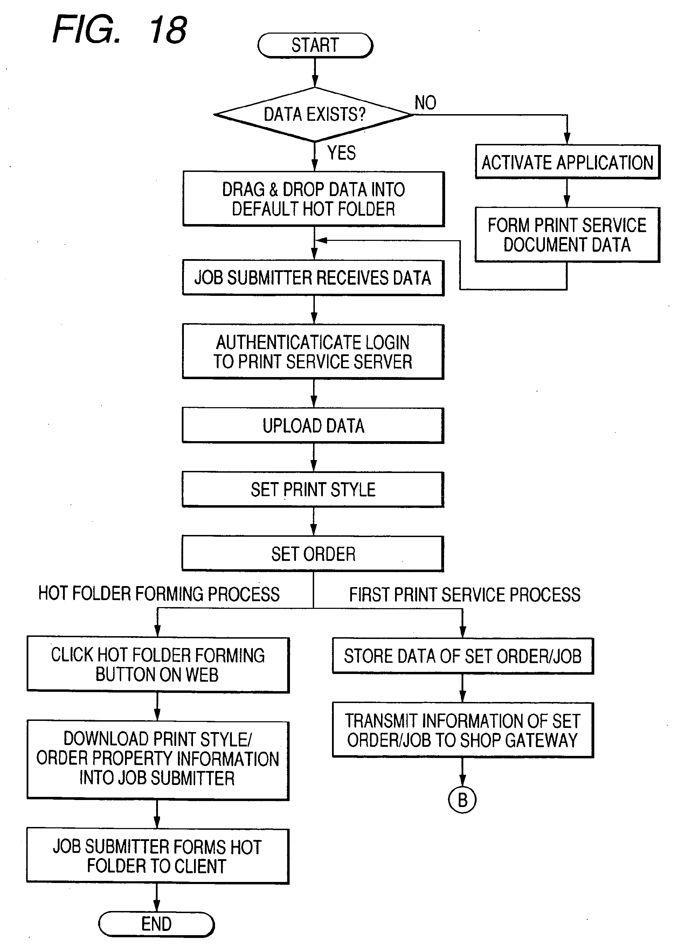

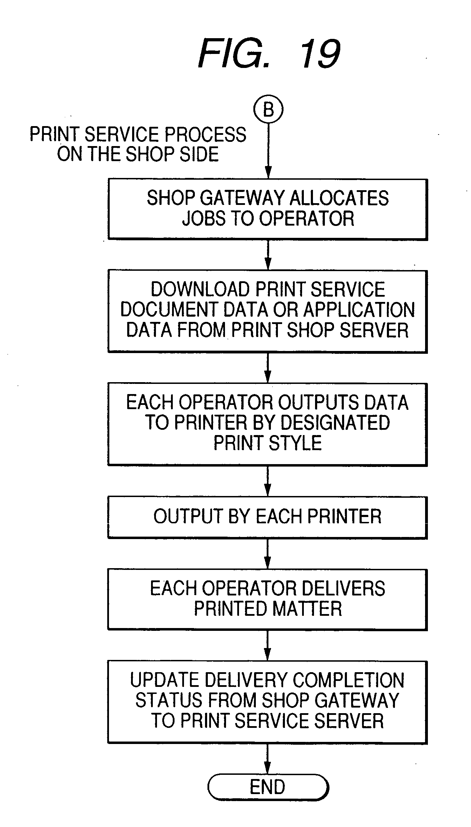

A process for forming the hot folder will now be described with reference to a processing flowchart of Fig. 16 and general flowcharts (Figs. 18 and 19).

### <Data creation by a print service document driver>

When the user activates the application program on the client computer 400 as shown in Process 1, the document data is converted into the print service document data 351 for the print service by the print service driver 461 and the data file is formed in the default hot folder 305.

### <Direct inputting of application data>

In the case where the document data of the application already exists or the user wants to upload the data without converting it onto the print service document data 351, or the like, the document data is directly dragged and dropped to the default hot folder 305 by using the mouse. At this time, the document data can be constructed by one or more file data used.

### <Data reception of job submitter>

When the data file is inputted to the foregoing default hot folder, the job submitter 420 is called and the foregoing default hot folder dialog (Fig. 7) is displayed. The data file inputted into the default hot folder is displayed into the list display portion 605 as mentioned above. The thumbnail and the document information can be confirmed by clicking the file portion with respect to the contents of each file.

After the user confirms the contents, he clicks. the upload button 607 of the default hot folder dialog.

### <Display and authentication of login dialog>

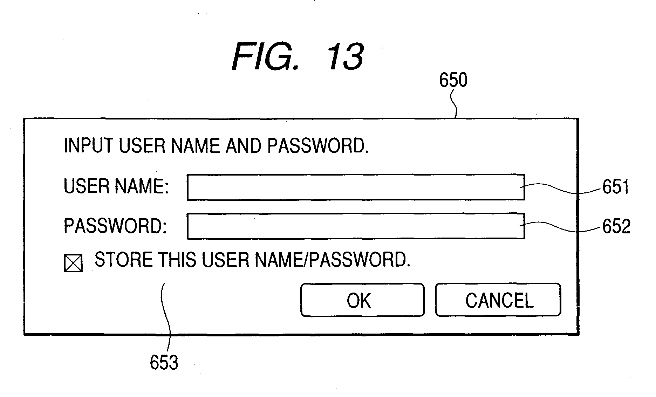

When the upload button is clicked, the job submitter 420 displays a login dialog 650 shown in Fig. 11. The user inputs a user name 651 or a user ID which has previously been allocated, further inputs a password 652, and clicks an OK button (Fig. 13). At this time, by checking a check box 653 of storage so that there is no need to input the user name/password again, the job submitter 420 encrypts the information and stores it into the hot folder profile management data 421.

After that, in Process 2, the job submitter 420 sets a Web address for authenticating a login of the print service which has unconditionally been predetermined into an address of a Web browser application and calls it.

Thus, the Web service manager 770 of the print service server receives the user name/password from the job submitter 420 by a protocol of http. The client manager 702 discriminates whether or not the contents, of the user name/password coincide with the user information 755 which is managed by the storing manager 708.

When the user authentication is confirmed by the client, manager 702, the Web service manager 770 returns information which shows that the user has been authenticated and which has unconditionally been determined to the job submitter 420. Thus, the job submitter recognizes the authentication of the user.

### <Uploading of data>

The job submitter confirms the authentication and uploads the data in the default hot folder to the print service server side. The uploaded data is temporarily held in the storage manager by the client manager 702.

### <Print style setting>

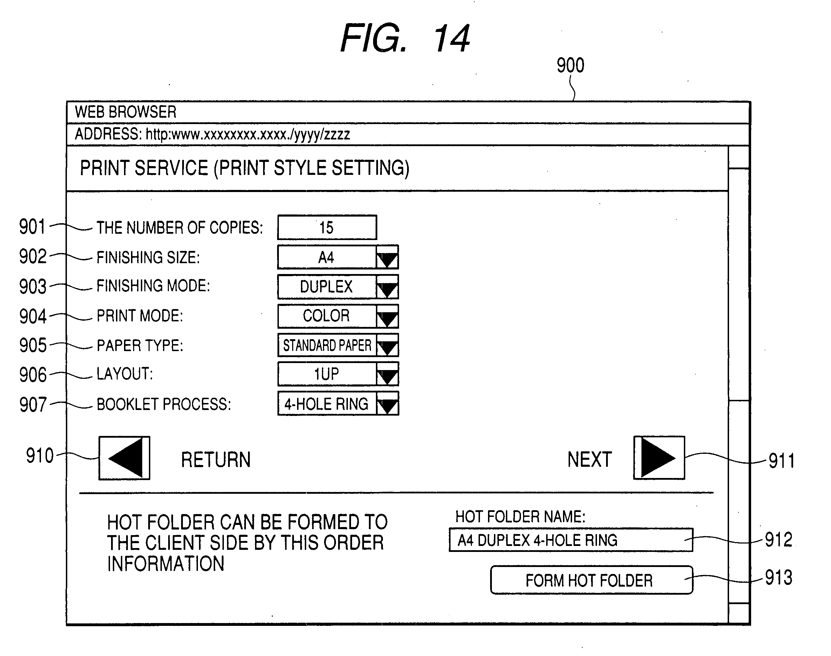

When the uploading is finished, the window of the Web browser application is opened and the processing routine advances to Web processes of the print service. As shown in Fig. 14, a Web page for setting the print style is displayed on the Web browser with respect to the uploaded data. To print, the user sets the following items in the Web page: the number of copies 901; a size of sheet size to be finished 902; a finishing mode of duplex/simplex 903; a color/monochromatic print mode 904; a paper type 905 such as standard paper/coated paper or the like; a layout 906 indicative of the number of pages which are arranged on one sheet; and a booklet process 907 such as staple binding, booklet binding, punching ring process, or the like.

The user clicks a button 911 to shift to the next process when he wants to advance to the next process. At this time, the client manager forms the job ID which has unconditionally been determined in the print service server and property information data of the inputted print style for the job administrating manager 705 and temporarily stores them as job data 752 into the storage data 780.

### <Order setting>

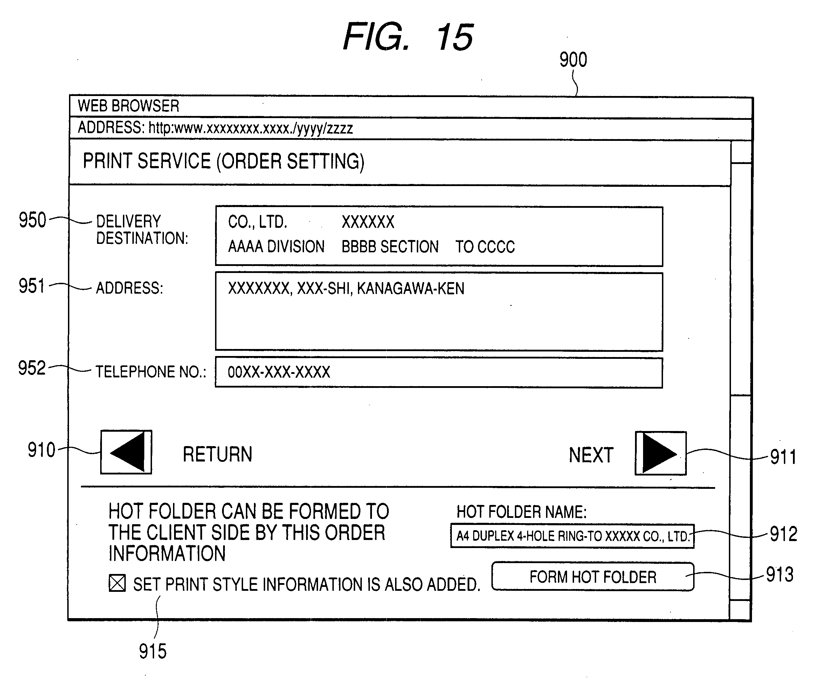

After the print style is set, the user sets the order. As shown in Fig. 15, a delivery destination 950, an address 951 of the delivery destination, a telephone number 952 of the delivery destination, and the like which are necessary for the setting of the order are inputted. After they are inputted, the user clicks the button 911 to the next process. At this time, the client manager requests the order administrating manager 704 to form the property information of the order and forms a code of an order ID which has unconditionally been determined in the print service server. The order data 750 is linked to the job data which has already been stored, formed and stored as order property information data into the storage data 780 together with the user name, the delivery destination, the address of the delivery destination, and the telephone number of the delivery destination which were inputted by the user.

When the user clicks the button 911 to the next process, a Web page to display the formed order ID is displayed. The user stores the order ID. In this manner, a series of order processes of the print service is completed.

### <Hot folder forming process>

When the print style setting or the order setting is inputted, if the user wants to form those settings as hot folders on the client, the user can form them by clicking a hot folder forming button 913 on a display screen for the print style setting or the order setting. At this time, the name of the hot folder is assumed to be an input 912. In the case of forming the hot folder upon order setting, whether or not the contents of the set print style are also included can be also designated by a check box 915 before it.

As hot folder property information designated by the user, the client manager transfers the information data 150 of the order property and the print style property and the information of the hot folder name to the job submitter 420 on the client in Process 6 as shown in Fig. 16. At this time, as mentioned above, there is also a case where the information data 150 is constructed only by the print style property or only by the order property in dependence on the timing set by the user.

In Process 7 in Fig. 16, the job submitter 420 forms the hot folder 300 onto the client on the basis of the order/print style property information 150 transmitted from the print service server 700 and the information of the hot folder name. At this time, the job submitter adds the downloaded order/print style property information 150 as new hot folder information to the hot folder property management data, and manages that data by linking it to the hot folder. Thus, an icon of the hot folder of the contents designated by the user is formed on the client.

### <First print service process>

As mentioned above, after completion of the confirming process of the order ID issued on the print service server as mentioned above, in Process 3 in Fig. 16, a shop manager 703 transmits the order/print style property information 150 and the information such as order ID, job ID, and the like to the shop gateway 801.

### <Print service process on the shop side>

On the basis of the information transmitted from the print service server, the process manager 802 of the shop gateway 801 allocates the jobs including the designation of the printer for printing to the operators in the shop. The operator to which the job has been allocated designates the designated order ID/job ID on the Web page from the operator's PC to the shop manager 703 of the print service server 700 and downloads the job data including the print data corresponding to the order ID/job ID onto the operator's PC in the shop.

At this time, the print data is print service document data or application data uploaded onto the print service server by the job submitter.

On the basis of the print style property information instructed by the process manager, each operator executes the printing process by the printer 820 instructed by the process manager 802 by using a printer driver on each operator's PC 810. At this time, the printer driver allows the designated printer to print through the print manager 803. The print manager always confirms the end of the printing, error occurrence, or the like. The process manager who receives information of the confirmation results always monitors a progressing situation of the printing.

If a booklet process is necessary in the off-line at a point of time when the printing is finished, each operator executes the booklet process in the off-line and-inputs the progressing situation to the process manager 802 through the operator's PC 810. At a point of time when the booklet process is finished and the printed matter is completed, a delivering process is executed. At a point of time when the delivering process is finished, a status indicative of the completion of the delivering process is inputted from the operator's PC to a delivery manager of the shop gateway as mentioned above.

Thus, as shown in Process 5 in Fig. 16, the process manager returns the status of the delivery completion to the print service server. The shop manager 703 updates the status of the order information of the corresponding order ID on the print service server. Thus, the first print service process of the user is completed.

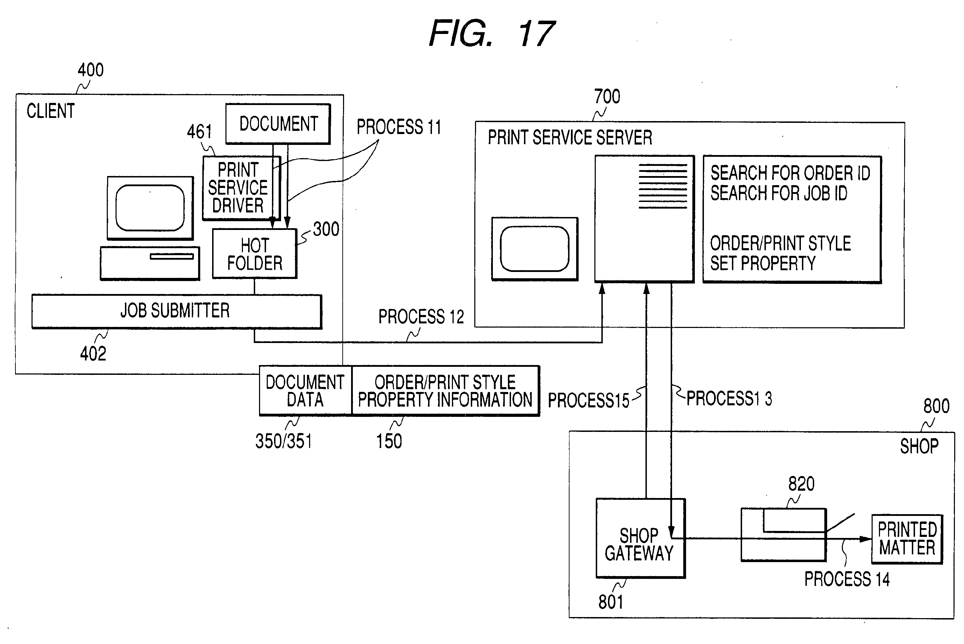

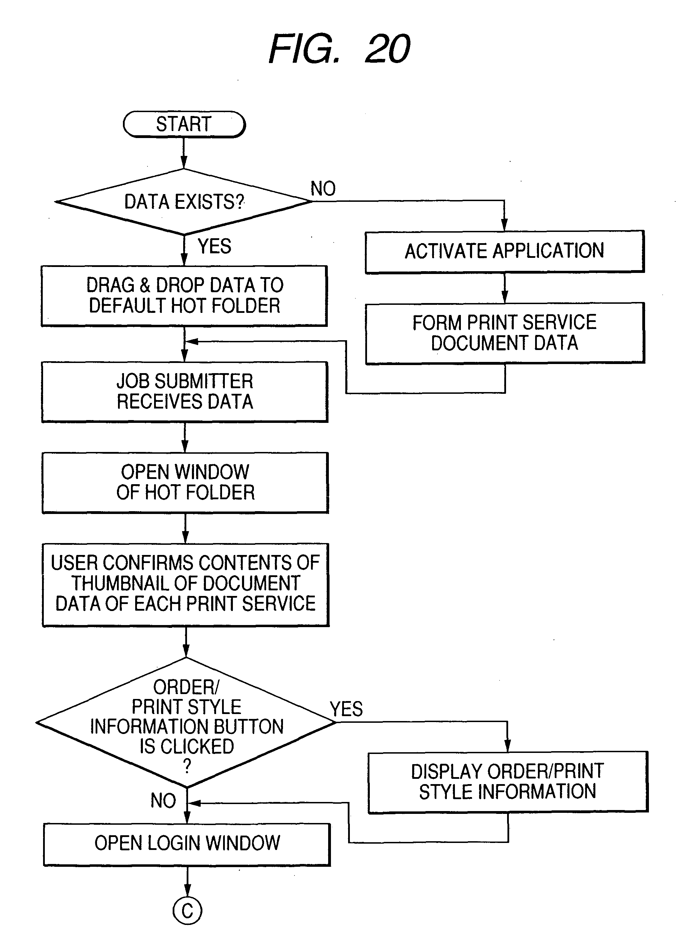

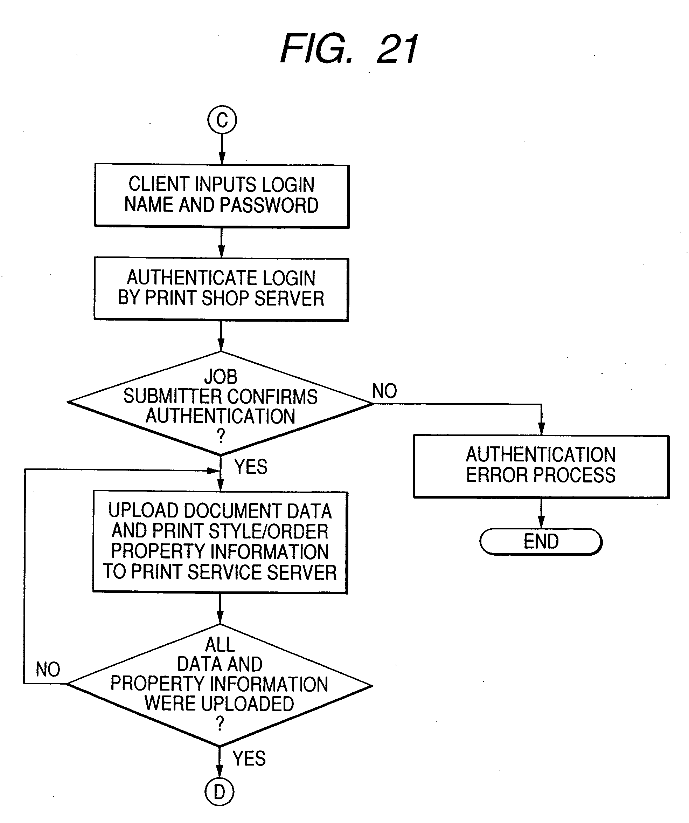

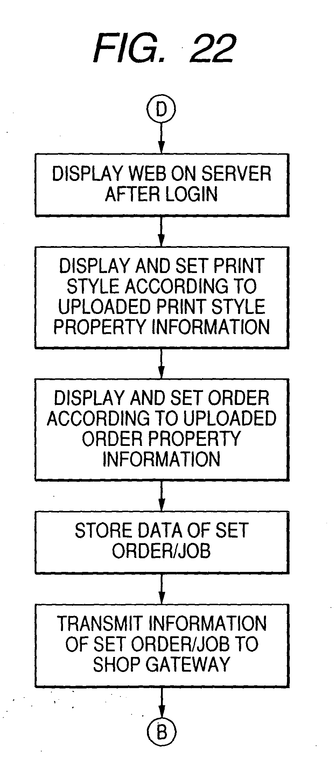

Processes for using the formed hot folder will now be described with reference to a flowchart for a process to use the hot folder in Fig. 17 and general flowcharts (Figs. 20 to 22).

### <Data input to hot folder on client>

As shown in Process 11, the user activates an application program on the client computer 400 in a manner similar to the default hot folder. The document data is converted into the print service document data 351 for the print service by the print service driver 461. The user selects an arbitrary one of the hot folders 300 on a user interface of the print service driver. The converted data is formed in the hot folder.

In a manner similar to the default hot folder, in the case where the document data of the application already exists or the user wants to upload the data without converting into the print service document data (351) or the like, the document data is directly dragged and dropped to the hot folder (300) by using the mouse.

### <Confirmation of thumbnail/document information>

When the data file is inputted to the foregoing hot folder, the job submitter 420 is called and the foregoing hot folder dialog (Fig. 8) is displayed. The thumbnail and the document information can be confirmed by the inputted data file in a manner similar to the case of the default hot folder.

### <Confirmation of order/print style information>

When the user clicks the button 603 to display the order/print style information property, the order/print style property information set into the designated hot folder is displayed in an information display portion of the hot folder dialog shown in Fig. 11. Before the data is uploaded onto the print service server 700, the order/print style property information 150 set into the hot folder can be confirmed.

After the user confirms the contents, he clicks the upload button 607 on the hot folder dialog.

### <Display and authentication of login dialog>

When the upload button is clicked, the job submitter 420 displays the login dialog 650 shown in Fig. 13 in a manner similar to the flow of the default hot folder mentioned above and requests the print service server to input the user name/password and confirm the authentication, thereby checking the authentication.

If the check box 653 for storage has been checked so that there is no need to input the foregoing user name/password again, the inputting process of the login is omitted and the processing routine advances to a subsequent authenticating process.

### <Uploading of document data and property information>

As shown in Process 12 in Fig. 17, the job submitter uploads the document data 350/651 in the hot folder and the order/print style property information 150 set into the hot folder onto the print service server side by the confirmation of the authentication. The uploaded data is temporarily held in the storing manager by the client manager 702.

### <Confirmation of print style/order information on Web>

By using the order/print style property information 150 set into the hot folder as default values, the client manager 702 displays the print style/order information on the Web page (Fig. 14/Fig. 15) and sets the values. Therefore, the user does not need to make similar setting again. When the user wants to change the values set on the hot folder, the values can be also changed on this Web page.

In a manner similar to the case of the default hot folder, a new order ID is issued to the user in the end and, after that, as shown in Process 13 and Process 14 in Fig. 17, the printing process is executed on the shop side through the shop gateway 801. As shown in Process 15, the print service server 700 is notified of the completion of the printing. Thus, the order process and the printing process based on the specific print setting using the hot folder are completed.

According to the foregoing embodiment, in the mechanism for uploading the print data of the client side in the print service system using the network, the function of the hot folder is provided and the request of the second and subsequent printings can be simplified, the order information and the print style information set by the user in the first printing process are set as property information onto the arbitrary hot folder and the order/print style of each hot folder can be switched.

### (Second embodiment)

The second embodiment will now be described hereinbelow with reference to the drawings. Explanation of the items common to those in the first embodiment is omitted here.

### <Hot folder>

A hot folder in the second embodiment is fundamentally similar to that in the first embodiment except for the following differences.

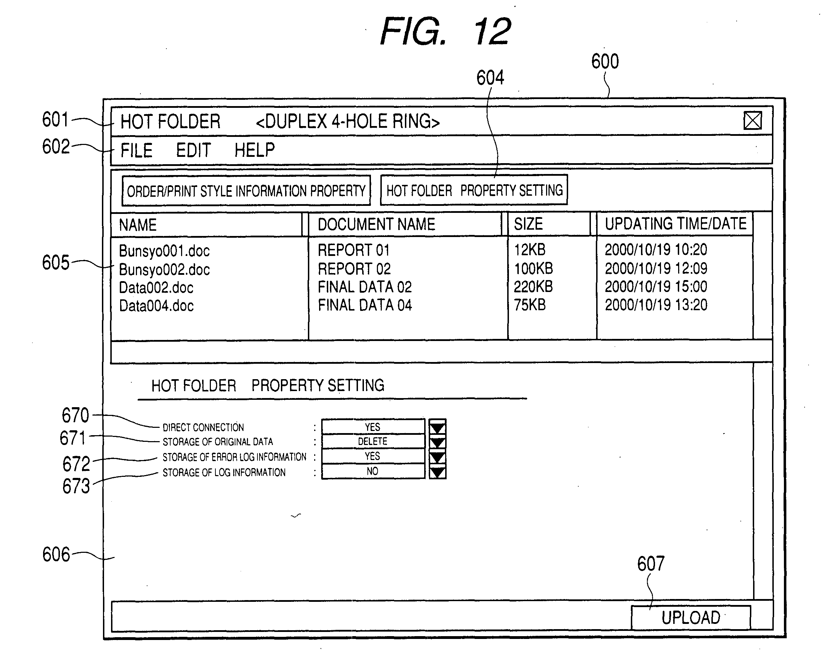

Fig. 12 shows display contents of setting of a property of the hot folder at the time when the hot folder property setting button 604 is clicked. In the selection setting of yes/no of direct connection 670, if "no" is selected, the system enters a processing mode in which the print data which was dragged and dropped is temporarily held in the hot folder, the job submitter 420 opens the default hot folder dialog (Fig. 7) or the hot folder dialog (Fig. 8) at the timing for executing the drag-&-drop, the user is allowed to confirm the contents, and the data is uploaded onto the server at the timing when the upload button 607 is clicked. If "yes" is selected, the system enters a direct connecting mode in which the print data which was dragged and dropped is directly uploaded onto the server without opening the default hot folder dialog (Fig. 7) or the hot folder dialog (Fig. 8). As mentioned above, the modes can be switched by the selection setting and the order information and the print style information on the hot folder can be used as they are in the processes up to the setting on the Web page. They can be also switched by the attribute information of the direct connection 670 on the hot folder.

In this case, also with respect to the input of the user name 651 and the password 652 on the login dialog, if the check box 653 for storing the user name/password has been checked, the inputting operation by the user on the dialog can be omitted and the authenticating confirmation in the Web service manager can be also performed.

If "no" of the direct connection 670 is selected, prior to uploading the data onto the print service server 700, the order/print style property information 150 set into the hot folder can be confirmed and, further, the contents of the setting can be preliminarily changed by the hot folder of the client side.

As for storage 671 of the original data, one of a mode in which the data inputted to the hot folder is left as it is, a mode in which the data is moved to the original folder 301, and a mode in which the data is deleted after it is uploaded can be selected. As for storage 672 of the error log information, when an error occurs, whether or not the error log information is held in the log folder 303 and the data in which the error has occurred is moved to the error folder 302 can be selected. As for storage 673 of the log information, whether or not the log information up to the ordinary uploading is stored into the log folder 303 can be selected.

The setting contents of the setting functions of the above properties are common both in the default hot folder and in the general hot folder.

### <Data reception by job submitter>

In addition to the operation in the first embodiment, the following processes are executed in the second embodiment.

If "yes" of the direct connection 670 of the property setting of the hot folder is selected, the window of the default hot folder dialog is not opened but the processing routine can advance to the next login confirming process.

### <Confirmation of thumbnail/document information>

In addition to the operation in the first embodiment, the following processes are executed in the second embodiment.

If "yes" of the direct connection 670 of the property setting of the hot folder is selected, the window of the hot folder dialog is not opened but the processing routine can advance to the next login confirming process.

### <Confirmation/change of order/print style information>

If the user clicks the button 603 to display/change the order/print style information property, the order/print style property information of the hot folder dialog is displayed in the information display portion of the hot folder dialog shown in Fig. 11. The following items can be confirmed and changed: the number of copies 621; a size of sheet to be finished 622; a finishing mode 623 of duplex/simplex; a color/monochromatic color mode 624; a paper type 625 such as standard paper/coated paper or the like; a layout 626 showing how many pages are arranged on one sheet; a booklet process 627 such as staple binding, booklet binding, hole-opening ring process, or the like; and a delivery destination 628, an address 629 of the delivery destination, and a telephone number 630 of the delivery destination which are necessary for the setting as an order.

Prior to uploading the data onto the print service server 700, the order/print style property information 150 set into the hot folder can be confirmed and, further, the contents of the setting can be preliminarily changed on the hot folder of the client side.

When the user changes the predetermined order/print style property information 150 here, the job submitter 420 handles such information as temporary data, but uploads the temporarily held order/print style property information onto the print service server without changing the original order/print style property information.

At a point of time when the contents are confirmed/changed, the user clicks the upload button 607 of the hot folder dialog.

The following other operation items in the second embodiment are similar to those in the first embodiment: <data creation by print service document driver>; <direct inputting of application data>; <display and authentication of login dialog>; <uploading of data>; <print style setting>; <order setting>; <hot folder forming process>; <first print service process>; <print service process on the shop side>; <data input to hot folder on client>; <display and authentication of login dialog>; <uploading of document data and property information>; and

### <confirmation of print style/order information on Web page>.

According to the foregoing embodiment, in the mechanism for uploading the print data of the client side using the hot folder, in the second and subsequent printing processes, the process for temporarily holding the print data which was dragged and dropped into the hot folder, confirming the contents, and uploading them onto the server and the process for executing in a lump the processes to directly upload the print data which was dragged and dropped onto the server and setting the order information and the print style information on the hot folder can be switched by the attribute information on the hot folder. Thus, the processing flow for the printing process by the user can be simplified.

For example, in the works at a car sales company, a travel agency, or the like in which brochures are often distributed, there is a case where a brochure distributing service or a leaflet distributing service on the network is executed. In such a case, by enabling predetermined styles of the brochure to be previously held in the hot folder, brochures of a desired style can be easily formed. Specifically speaking, there is also a case where the duplex printing and the type of booklet are previously designated as style information every type (contents of the print data) of brochure. In such a case, regular brochures according to the contents of the print data can be formed.

## Claims

1. An information processing apparatus for processing print data, comprising:
transfer means for transferring the print data stored in predetermined memory means;
setting means for setting print setting information which is included in said print data and used when the print data is printed;
monitoring means for holding the print setting information set by said setting means and monitoring that another print data is transferred by said transfer means; and
print control means for allowing a printing process of the print data to be executed by using said held print setting information in response to that said monitoring means recognizes the transfer of said another print data.

2. An apparatus according to claim 1, wherein said print control means includes storing means for holding said another print data transferred by said transfer means and said print setting information,
when said another print data is transferred, said print control means generates an event and allows the printing process of the print data to be executed in accordance with said event, and
said storing means holds predetermined print setting information which has previously been given, and when additional information is set once by said setting means and the printing process is executed once, said storing means obtains said print setting information from said setting means and holds it in place of said print setting information which has previously been given.

3. An apparatus according to claim 1, wherein said print setting information includes print style information of the print data or order information of the printing process.

4. An apparatus according to claim 2, further comprising confirmation setting means for setting whether or not contents of said printing process are confirmed,
and wherein said print control means includes confirmation changing means for, if it is set by said confirmation setting means that the contents of said printing process are confirmed, displaying the contents of said printing process, and when a further change in said print setting information is received, executing said change.

5. An information processing method of processing print data, comprising:
a transfer step of transferring the print data stored in predetermined memory means;
a setting step of setting print setting information which is included in said print data and used when the print data is printed;
a monitoring step of holding the print setting information set by said setting step and monitoring that another print data is transferred by said transfer step; and
a print control step of allowing a printing process of the print data to be executed by using said held print setting information in response to that the transfer of said another print data is recognized in said monitoring step.

6. A method according to claim 5, wherein said print control step includes a storing step of holding said another print data transferred by said transfer step and said print setting information,
in said print control step, when said another print data is transferred, an event is generated and the printing process of the print data is executed in accordance with said event, and
in said storing step, predetermined print setting information which has previously been given is held, and when additional information is set once by said setting step and the printing process is executed once, said print setting information is obtained from said setting step and held in place of said print setting information which has previously been given.

7. A method according to claim 5, wherein said print setting information includes print style information of the print data or order information of the printing process.

8. A method according to claim 5, further comprising a confirmation setting step of setting whether or not contents of said printing process are confirmed,
and wherein said print control step further includes a confirmation changing step of, if it is set by said confirmation setting step that the contents of said printing process are confirmed, displaying the contents of said printing process, and when a further change in said print setting information is received, executing said change.

9. A print system including at least one or more clients for forming data for printing and a server for obtaining the print data from said clients and processing it, which server is to communicate with an output control apparatus which executes a printing process of the print data communicated from said server and processes a printing request from said client, wherein
said client comprises:
setting means for displaying a print service. setting display screen which is obtained from said server onto a display apparatus possessed by said 0client and setting a print setting to be registered onto said print service setting display screen;
specific storing area forming means for forming a specific storing area in which the print setting set by said setting means is used as property information onto memory means every setting; and
folder managing means for detecting an inputting state of document information into said specific storing area formed by said specific storing area forming means and uploading said print setting and said document information set in said specific storing area onto said server, and
said server comprises:
distributing means for distributing print service setting display screen information when a new print service is requested by said client; and
transmitting means for processing said print setting and said document information which are uploaded from said client, forming a print job for said output control apparatus, and transmitting said print job.

10. A system according to claim 9, wherein said print setting includes print style information of the print data or order information of the printing process.

11. A system according to claim 9, wherein said folder managing means manages said print setting on a table on memory means which is linked to said specific storing area.

12. A system according to claim 9, further comprising changing means for changing the print setting set in said specific storing area.

13. A system according to claim 9, wherein said client further comprises transmitting means for transmitting said print setting and said document information set by said setting means to said server when the new print service is requested.

14. A system according to claim 9, wherein said client further comprises control means for displaying the print setting set in said specific storing area onto said display apparatus through a browser.

15. A system according to claim 14, wherein said control means detects an instructing state of the document information inputted into said specific storing area and displays a thumbnail of the document information according to the print setting onto said display apparatus through the browser.

16. A system according to claim 14, wherein said control means detects an instructing state of the document information inputted into said specific storing area and displays order information of the document information according to the print setting onto said display apparatus through the browser.

17. A system according to claim 14, wherein said control means detects an instructing state of the document information inputted into said specific storing area and displays print style information of the document information according to the print setting onto said display apparatus through the browser.

18. A system according to claim 12, wherein said specific storing area forming means can form a new specific storing area in which the print setting changed by said changing means is set to a new attribute.

19. An information processing apparatus which can communicate with a server, comprising:
setting means for displaying a print service setting display screen which is obtained from said server onto a display apparatus possessed by said information processing apparatus and setting a print setting to be registered onto said print service setting display screen;
specific storing area forming means for forming a specific storing area in which the print setting set by said setting means is used as property information onto memory means every setting; and
folder managing means for detecting an inputting state of document information into said specific storing area formed by said specific storing area forming means and uploading said print setting and said document information set in said specific storing area onto said server.

20. A method of using an information processing apparatus which can communicate with a server, comprising:
a setting step of displaying a print service setting display screen which is obtained from said server onto a display apparatus possessed by said information processing apparatus and setting a print setting to be registered onto said print service setting display screen;
a specific storing area forming step of forming a specific storing area in which the print setting set by said setting step is used as property information onto memory means every setting; and
a folder managing step of detecting an inputting state of document information into said specific storing area formed by said specific storing area forming step and uploading said print setting and said document information set in said specific storing area onto said server.

21. A control program stored in a computer-readable storing medium, comprising:
a setting code for displaying a print service setting display screen which is obtained from a server onto a display apparatus possessed by an information processing apparatus and setting a print setting to be registered onto said print service setting display screen;
a specific storing area forming code for forming a specific storing area in which the print setting set by said setting code is used as property information onto memory means every setting; and
a folder managing code for detecting an inputting state of document information into said specific storing area formed by said specific storing area forming code and uploading said print setting and said document information set in said specific storing area onto said server.

22. A system according to any one of claims 9 to 18 which also includes said output control apparatus which is to execute a printing process of print data communicated from said server and to process a printing request from said client.

23. A computer readable storage medium having stored thereon computer program code adapted to execute, in a computer processor, processing according to each of the steps of the method of any one of claims 5 to 8 or 20.

24. A signal carrying computer program instructions for programming a programmable processing apparatus to become operable to perform a method as set out in any one of claims 5 to 8 or 20.
